# EUROPEAN PATENT APPLICATION

(11) **EP 4 811 808 A1**
(43) Date of publication of application: **23.09.2026**
(21) Application number: 25801492.7
(22) Date of filing: 17.01.2025
(51) Int. Cl.: H04N 23/695

(54) **IMAGING DEVICE CALIBRATION APPARATUS AND METHOD, AND IMAGING DEVICE AND ELECTRONIC DEVICE**

(30) Priority: 07.01.2025 CN 202510024027
(71) Applicant: Suzhou ZWO Co., Ltd., Suzhou, Jiangsu 215000 (CN)
(72) Inventor: MENG, Di, Suzhou, Jiangsu 215000 (CN); WEN, Ja, Suzhou, Jiangsu 215000 (CN)
(74) Representative: Hertin und Partner Rechts- und Patentanwälte PartG mbB
(86) International application number: PCT/CN2025/073082
(87) International publication number: WO 2026/148683

(57) **Abstract**

The present invention provides a calibration apparatus for the imaging device, a method, an imaging device, and an electronic apparatus, and relates to the field of calibration of imaging devices. The calibration apparatus for the imaging device includes a deviation analysis module and a calibration module. The deviation analysis module is configured to obtain a deviation amount between a current position and a desired position of a rotation axis of the imaging device, based on at least three celestial images at different spatial positions. The calibration module is configured to calibrate the imaging device based on the deviation amount. The calibration apparatus for the imaging device provided by the embodiments of the present invention can effectively enhance the autonomy of device calibration. For the user end, it greatly simplifies the calibration process, and improves the efficiency, accuracy, and reliability of calibration.

## Description

### CROSS-REFERENCE TO RELATED APPLICATION

The present invention claims priority to Chinese patent application No. 2025100240272, filed with the China National Intellectual Property Administration on January 7, 2025, entitled "CALIBRATION APPARATUS FOR IMAGING DEVICE, METHOD, IMAGING DEVICE, AND ELECTRONIC DEVICE", the entire contents of which are incorporated herein by reference.

### TECHNICAL FIELD

The present invention relates to the field of calibration of imaging devices, and specifically to a calibration apparatus for the imaging device, a method, an imaging device, and an electronic device.

### BACKGROUND ART

Shooting devices such as astronomical telescopes play a crucial role in astronomical observation and shooting. Astronomical observation objects, such as stars, planets, and galaxies, are all in motion state, and the Earth itself is also rotating. Therefore, it needs to precisely track the shot objects to ensure accuracy and clarity of observation and shooting.

During the shooting process, the prior art usually uses an equatorial instrument or a theodolite to track the shot object. The equatorial instrument can provide high-precision tracking, but its operation is complex, the calibration process is cumbersome and time-consuming, and its adaptability to extreme weather conditions is also relatively poor. The tracking method of theodolite relies on combining with a gradienter or other mechanical devices for calibration, but the calibration operation is also not simple enough and the calibration accuracy is limited. As a result, the efficiency and the reliability of the calibration of the shooting device need to be improved.

### SUMMARY

An object of embodiments of the present invention is to provide a calibration apparatus for an imaging device, a method, an imaging device, and an electronic device. By compensating for deviation amounts through software algorithms, the solution overcomes deviations that occur during the imaging process when using calibration methods that only rely on physical means to adjust the rotation axis of the imaging device to a desired position (e.g., an absolutely vertical position, where the device is absolutely horizontal). This approach improves the efficiency and reliability of calibration.

In a first aspect, the embodiments of the present invention provide a calibration apparatus for the imaging device, wherein the calibration apparatus includes a deviation analysis module and a calibration module; the deviation analysis module is configured to obtain a deviation amount between a current position and a desired position of a rotation axis of the imaging device, based on at least three celestial images at different spatial positions; and the calibration module is configured to calibrate the imaging device based on the deviation amount.

In the above implementation, the deviation analysis module of the calibration apparatus for the imaging device provided by the embodiments of the present invention calculates the deviation amount between the current position and the desired position of the rotation axis of the imaging device based on at least three celestial images at different spatial positions, and achieves the calibration of the imaging device based on the deviation value. The calibration apparatus for the imaging device provided by the embodiments of the present invention achieves compensations for the deviation amount through software algorithms, which eliminates deviations occurring during the imaging process when using the calibration method that only relies on physical means to adjust the rotation axis of the imaging device to the desired position (e.g., an absolutely vertical position, where the device is absolutely horizontal). By using the imaging device calibration method provided by the embodiments of the present invention to calibrate the imaging device, the stability of the imaging device in tracking the target object can be enhanced.

Optionally, in embodiments of the present invention, the different spatial positions include: a first spatial position and at least two second spatial positions, and the calibration apparatus further includes an image acquisition module, wherein the image acquisition module is configured to control the imaging device with the rotation axis at the first spatial position to acquire a first celestial image, and to acquire at least two second celestial images in the at least two second spatial positions.

Optionally, in the embodiments of the present invention, the first spatial position and the second spatial positions include spatial positions at different azimuth angles under a preset altitude angle, or spatial positions at different altitude angles under a preset azimuth angle.

In the above implementation, the image acquisition module of the imaging device provided by the embodiments of the present invention can acquire at least three different celestial images through two different ways. Corresponding to these two different celestial image acquisition methods, the deviation analysis module and the calibration module of the present invention have different processing procedures. Therefore, the calibration apparatus for the imaging device provided by embodiments of the present invention is provided with at least two calibration methods. Through the arrangement of the image acquisition module, it gives precise support for the subsequent calculation of the deviation amount, and provides a reliable foundation for the calibration of the imaging device.

Optionally, in the embodiments of the present invention, the calibration module includes a deviation compensation unit and a device control unit, wherein in a process of calibrating the imaging device based on the deviation amount, the deviation compensation unit is configured to use the deviation amount to compensate for the current position of the rotation axis to obtain a virtual position; and the device control unit is configured to control the imaging device to operate based on the virtual position.

In the above implementation, the deviation compensation unit of the calibration apparatus for the imaging device provided by the embodiments of the present invention is capable of compensating for the position of the rotation axis based on the deviation amount, thereby ensuring that the rotation axis of the imaging device is always close to or reaches the desired position. Thus, the complexity and errors of physical adjustment are avoided, and the virtual position is obtained directly through deviation compensation, which improves the precision of the calibration process. The deviation compensation unit uses the calculated deviation amount to precisely compensate for the position of the rotation axis of the imaging device through mathematical methods, so as to ensure that the rotation axis of the imaging device can operate in a desired position, which greatly avoids image distortions or deviations due to an undesirable position of the rotation axis. Moreover, the calibration apparatus for the imaging device provided by the embodiments of the present invention is based on the algorithm, which enables the rotation axis of the imaging device to be quickly adjusted to the desired position without relying on repeated physical debugging. This not only reduces the errors caused by manual adjustment but also improves the working efficiency of the entire system. Especially in application scenarios of multiple calibrations or high-frequency observations, it can achieve rapid and efficient calibration.

Optionally, in the embodiments of the present invention, the deviation amount includes a first deviation amount between the current position of the rotation axis and an absolutely vertical position, wherein when the deviation amount is the first deviation amount, the deviation compensation unit is configured to compensate for the current position of the rotation axis by using the first deviation amount, so as to obtain a virtual horizontal position of the imaging device; and the device control unit is specifically configured to control a theodolite of the imaging device to operate at the virtual horizontal position.

In the above implementation, the calibration module of the calibration apparatus for the imaging device provided by the embodiments of the present invention replaces the physical adjustment with the virtual horizontal position, making the calibration process more efficient. The device does not require frequent physical adjustments and works only based on virtual horizontal GPS positions, thus reducing the debugging duration and work intensity, and improving the calibration efficiency.

Optionally, in the embodiments of the present invention, the calibration module further includes: a virtual horizontal monitoring unit, wherein the virtual horizontal monitoring unit is configured to monitor whether a horizontal variation amount in virtual horizontal position of the imaging device operating at the virtual position exceeds a horizontal variation threshold, and to generate a re-calibration signal when the horizontal variation amount in virtual horizontal position exceeds the horizontal variation threshold.

Optionally, in the embodiments of the present invention, a range of values for the horizontal variation threshold is [3°, 6°].

In the above implementation, regarding the calibration apparatus for the imaging device provided by the embodiments of the present invention, by providing the virtual horizontal monitoring unit, once the virtual horizontal variation amount of the device exceeds the set threshold, the virtual horizontal monitoring unit will generate the re-calibration signal, thereby triggering the automatic calibration process, which ensures that the virtual horizontal position of the device always maintains stable, thereby guaranteeing that the device can maintain high-precision horizontal calibration in long-term operations or variation environments. The virtual horizontal monitoring unit provides a dynamic correction function for the imaging device, enabling the device to eliminate horizontal deviations caused by external disturbances or internal wear. By setting a reasonable horizontal variation threshold, timely corrections can be made when the device malfunctions occur, thereby enhancing the fault tolerance of the system, and avoiding major errors caused by the accumulation of minor deviations.

Optionally, in the embodiments of the present invention, the deviation amount includes a second deviation amount between the current position of the rotation axis and a north celestial pole position under the same coordinate system, wherein when the deviation amount is the second deviation amount, the deviation compensation unit is configured to compensate for the current position of the rotation axis by using the second deviation amount, so as to obtain a virtual north pole position of the imaging device; and the device control unit is configured to generate a device control signal including the second deviation amount and/or the virtual north pole position.

In the above implementation, the calibration module obtains the virtual north pole position of the imaging device by compensating for the deviation of the rotation axis. The theodolite can simulate the working mode of the equatorial instrument when the imaging device is at the virtual north pole position, which greatly improves the applicability and accuracy of the device. Especially in astronomical imaging, it can greatly avoid the generation of a field rotation and achieve a better imaging effect. It not only reduces the cost of hardware adjustments and enhances the imaging effects, but also improves the overall performance and application range of the imaging device.

Optionally, in the embodiments of the present invention, in a process of obtaining a deviation amount between a current position and a desired position of a rotation axis of the imaging device, based on at least three celestial images at different spatial positions, the deviation analysis module is configured to: obtain coordinate positions of the three celestial images respectively under an equatorial coordinate system based on the three celestial images of the different spatial positions; convert the coordinate positions under the equatorial coordinate system to coordinate positions under the rectangular coordinate system, and calculate a normal vector of a plane formed by the three coordinate positions under the rectangular coordinate system; and transform the normal vector under the rectangular coordinate system to coordinate positions under a horizontal coordinate system to obtain horizontal coordinates of the rotation axis; and obtain the deviation amount of the rotation axis based on the horizontal coordinates of the rotation axis and standard horizontal coordinates of the rotation axis in an absolutely vertical position.

In the above implementation, regarding the calibration apparatus for the imaging device provided by the embodiments of the present invention, by providing a deviation analysis module, by analyzing the celestial positions in the celestial image, and combining with coordinate conversion and geometric calculation, the first deviation amount between the current position of the rotation axis of the imaging device and the absolutely vertical position can be precisely obtained. The first deviation amount is configured to compensate for the rotation axis position of the device, enabling the rotation axis of the imaging device to be at the desired horizontal position.

Optionally, in the embodiments of the present invention, the deviation amount includes a third deviation amount between an actual positional coordinate of the celestial images obtained by the imaging device at the current position of the rotation axis and a command positional coordinate of the celestial images obtained by the imaging device at the absolutely vertical position of the rotation axis, wherein in a process of obtaining a deviation amount between a current position and a desired position of a rotation axis of the imaging device, based on at least three celestial images at different spatial positions, the deviation analysis module is specifically configured to: use the first celestial image as a reference image and obtain a reference origin; acquire at least two groups of command positional coordinates and actual positional coordinates of the second celestial images relative to the reference origin, wherein the command positional coordinates represent position coordinates of the second celestial images acquired by the imaging device when the rotation axis of the imaging device is at the absolutely vertical position, and the actual positional coordinates represent coordinate positions of the second celestial images acquired by the imaging device when the rotation axis of the imaging device is at the current position; and calculate a third deviation amount based on the at least two groups of command positional coordinates and the actual positional coordinates of the second celestial images.

Optionally, in the embodiments of the present invention, in a process of calculating a third deviation amount based on the at least two groups of the command positional coordinates and the actual positional coordinates of the second celestial images, the deviation analysis module is specifically configured to: calculate a transformation matrix converting the command positional coordinates to the actual positional coordinates based on the at least two groups of the command positional coordinates and the actual positional coordinates of second celestial images, and calculate an inverse matrix of the transformation matrix to obtain the third deviation amount.

Optionally, in the embodiments of the present invention, when the deviation amount is the third deviation amount, the deviation compensation unit is configured to use the third deviation amount to compensate for the current position of the rotation axis, thereby obtaining a virtual command coordinate, and the device control unit is specifically configured to control the imaging device to operate under the virtual command coordinate during the imaging process of the imaging device.

In the above implementation, the calibration apparatus for the imaging device provided by the embodiments of the present invention can perform real-time calibration before each imaging of the imaging device. By applying the inverse matrix of the transformation matrix, the current position of the actual rotation axis of the imaging device (i.e., the current coordinate of the rotation axis of the imaging device) can be converted to the desired position of the rotation axis of the imaging device, thereby generating the virtual command coordinate. It can effectively compensate for the difference between the actual position of the rotation axis and the desired position due to the deviation of the rotation axis of the device, which realizes the real-time calibration of the imaging device, so as to ensure the accuracy and stability of the imaging of the device after calibration.

In a second aspect, the embodiments of the present invention provide a calibration method for an imaging device, wherein the calibration method includes: obtaining a deviation amount between a current position and a desired position of a rotation axis of the imaging device, based on at least three celestial images at different spatial positions; and calibrating the imaging device based on the deviation amount.

Optionally, in the embodiments of the present invention, when the deviation amount includes a first deviation amount between the current position of the rotation axis and an absolutely vertical position, a step of calibrating the imaging device based on the deviation amount includes: compensating for the current position of the rotation axis by using the first deviation amount to obtain a virtual horizontal position of the rotation axis, and controlling a theodolite to work under the virtual position.

Optionally, in the embodiments of the present invention, when the deviation amount includes a second deviation amount between the current position of the rotation axis and a north celestial pole position under a same coordinate system, a step of calibrating the imaging device based on the deviation amount includes: compensating for the current position of the rotation axis by using the second deviation amount to obtain a virtual north pole position of the imaging device, and generating a device control signal including the second deviation amount and/or the virtual north pole position.

Optionally, in the embodiments of the present invention, when the deviation amount includes a third deviation amount between an actual positional coordinate of the celestial images obtained by the imaging device at the current position of the rotation axis and a command positional coordinate of the celestial images obtained by the imaging device at the absolutely vertical position of the rotation axis, a step of calibrating the imaging device based on the deviation amount includes: using the third deviation amount to compensate for the current position of the rotation axis, thereby obtaining a virtual command coordinate, and controlling the imaging device to perform imaging under the virtual command coordinate during the imaging process of the imaging device.

In a third aspect, the embodiments of the present invention provide an imaging device, and the imaging device includes: an imaging module, a theodolite, and a controller, wherein the imaging module and the theodolite are connected to the controller; the imaging module is configured to acquire at least three celestial images at different spatial positions and send the celestial images to the controller; the controller is configured to compensate for a current position of a rotation axis to obtain an imaging virtual position based on the celestial images, and to send the virtual position to the theodolite; and the theodolite is configured to receive the virtual position.

In the above implementation, the imaging device provided by the present invention realizes rotation axis calibration based on the celestial images through the collaborative operation of the imaging module, the theodolite, and the controller. The imaging module acquires the celestial images at different spatial positions and sends them to the controller. The controller compensates for the current position of the rotation axis based on these images, calculates the virtual position, and sends the virtual position to the theodolite. After receiving the virtual position, the theodolite calibrates the imaging device. The imaging device can effectively compensate for the physical positional deviation of the rotation axis of the device, which ensures that the imaging device can be precisely aligned to the target, thereby improving the positioning accuracy and the imaging effect of the device.

In a fourth aspect, the embodiments of the present invention provide an electronic device, and the electronic device includes a memory and a processor, wherein the memory stores program instructions, and the processor performs the steps in any one of the embodiments in the above calibration method for the imaging device when running the program instructions.

In a fifth aspect, the embodiments of the present invention provide a computer program product, wherein the computer program product includes computer programs/instructions, and the computer programs/instructions are processed by a processor to perform the steps in any one of the embodiments of the above calibration method for the imaging device.

In a sixth aspect, the embodiments of the present invention further provide a computer-readable storage medium, and the computer-readable storage medium stores computer program instructions, wherein the computer program instructions perform the steps in any one of the embodiments in the above calibration method for the imaging device when read and executed by a processor.

### BRIEF DESCRIPTION OF DRAWINGS

In order to more clearly illustrate the technical solutions in the embodiments of the present invention, the following will briefly introduce the drawings to be used in the embodiments of the present invention. It is to be understood that the following drawings illustrate only certain embodiments of the present invention, and therefore should not be regarded as a limitation of the scope. For persons of ordinary skill in the field, other relevant drawings can be obtained according to these drawings without inventive efforts.
FIG. 1 shows a schematic diagram of modules of a calibration apparatus for an imaging device provided by embodiments of the present invention;
FIG. 2 shows another schematic diagram of modules of a calibration apparatus for an imaging device provided by embodiments of the present invention;
FIG. 3 shows a calibration flowchart for an imaging device provided by embodiments of the present invention;
FIG. 4 shows a flowchart of a calibration example provided by embodiments of the present invention;
FIG. 5 shows a flowchart of another calibration example provided by embodiments of the present invention;
FIG. 6 shows a flowchart of another calibration example provided by embodiments of the present invention; and
FIG. 7 shows a structure schematic diagram of an electronic device provided by embodiments of the present invention.

Reference numbers: calibration apparatus for the imaging device-100; image acquisition module-110; deviation analysis module-120; calibration module-130; deviation compensation unit-131; device control unit-132; virtual horizontal monitoring unit-133; electronic device-200; processor-201; memory-202.

### DETAILED DESCRIPTION OF EMBODIMENTS

The technical solutions in the embodiments of the present invention will be described in conjunction with the drawings in the embodiments of the present invention. For example, the flowchart and block diagram in the drawings show the architecture, functionality, and operation that may be realized by the system, method, and computer program product according to the plurality of embodiments of the present invention. At this point, each box in the flow schematic diagram or block schematic diagram may represent a module, program segment, or a part of code, and the module, program segment, or a part of the code includes one or more executable instructions for realizing specified logical functions. It should also be noted that in some embodiments as a replacement, the functions indicated in the boxes may also occur in a different order than those indicated in the drawings. For example, two consecutive blocks can actually be executed essentially in parallel, and they can sometimes be executed in reverse order, which depends on the functions involved. It is also noted that each block in the block diagram and/or flow diagram and a combination of blocks in the block diagram and/or flow diagram may be realized by a dedicated hardware-based system that executes the specified function or action, or may be realized by a combination of the dedicated hardware and computer instructions. Additionally, the various functional modules in various embodiments of the present invention can be integrated together to form a separate part, individual modules can exist alone, or two or more modules that can be integrated to form a separate part.

Shooting devices such as astronomical telescopes play a crucial role in astronomical observation and shooting. Astronomical observation objects, such as stars, planets, and galaxies, are all in motion status, and the Earth itself is also rotating. On the one hand, celestial bodies within the solar system, such as planets, are in motion in the universe, and their positions change over time. To ensure accurate observation and shooting, these celestial bodies require real-time tracking. On the other hand, the rotation of the Earth causes a change in the position of the observation target relative to the ground observation point. In order to maintain continuous observation and shooting for the target, the imaging process also needs to account for the effects of the rotation of the Earth. Furthermore, in astronomy, capturing faint celestial signals or performing deep observations often requires a long-term exposure. This requires the shooting device to maintain stable tracking for the target during the exposure period. Therefore, it needs to precisely track the shooting objects to ensure accuracy and clarity of observation and imaging.

The tracking for the shooting object in the prior art is usually achieved by the equatorial instrument, or the tracking for the imaging object is achieved through the theodolite.

The equatorial instrument is designed to address shortcomings of the horizontal device, with its primary purpose being to counteract the Earth's rotation for stargazing. The equatorial instrument has two mutually perpendicular rotation axes, which are called the right ascension axis and the declination axis respectively. When using the equatorial instrument, the first step is to adjust the right ascension axis to be parallel with the rotational axis of the Earth. By adjusting the rotation axis thereof to be parallel to the rotational axis of the Earth, the telescope can rotate synchronously with the Earth rotation, thereby achieving stable tracking for celestial bodies.

However, the tracking method for the shooting object based on the equatorial instrument is relatively complex and requires certain professional knowledge and experience. Since the calibration of the equatorial instrument involves multiple steps and details, the entire process may be relatively time-consuming. Meanwhile, the equatorial instrument is usually large in size and heavy in weight, which makes it inconvenient to carry and move, thereby limiting its use in outdoor environments or at positions away from fixed observation points. In addition, the calibration accuracy of an equatorial instrument may be affected by environmental factors, such as temperature, humidity, and air pressure. These changes may result in a change in the calibration state of the equatorial instrument, thereby affecting the accuracy of the observation.

The theodolite is an optical electrical measuring instrument widely used in fields such as aerospace, geographic surveying, land resource mapping, and petroleum exploration. The tracking function of the theodolite mainly relies on its internal precision mechanical structure and optical system, and the gradienter built in the device or other calibration components. Before using the theodolite, it needs to be calibrated. The theodolite needs to be correctly installed on a tripod or other stable support first, so as to ensure its stability and reduce the possibility of being affected by external factors. Then, the gradienter on the theodolite or other calibration component is used to perform initial horizontal adjustment and vertical calibration on the theodolite, so as to ensure the accuracy of its measurement and tracking.

The tracking of the theodolite is based on its angle measurement principle. By precisely measuring the relative positional relationship between the target point and the reference point (i.e., the horizontal angle and the altitude angle), the position and direction of the target point can be determined. During the tracking process, the telescope of the theodolite will continuously point towards the target, and the internal angle measurement system will simultaneously record and update the position information of the target in real time.

However, when using a tripod combined with the theodolite, if the ground surface is not completely horizontal, it will cause the rotation plane of the theodolite not to be horizontal during its rotation around its own horizontal axis, and the rotation axis will not point to the center of the Earth as positioned by GPS. This "horizontal rotation" in a non-horizontal state is actually changed along with a change in height, which in turn affects the stability of the tracking. In order to meet the requirements of the theodolite for tracking celestial bodies, it is necessary to independently calculate the rotational speeds of the altitude angle and the horizontal direction angle. This calculation is mainly based on GPS coordinates, time, and the specific object to be observed, and it is the key to ensure that the device can accurately and stably track the target. Therefore, when the tripod and the theodolite are not level on the ground, the height change caused by the horizontal rotation will become a significant issue, thereby affecting the accuracy and stability of the tracking.

Based on this, the present invention provides a calibration apparatus for the imaging device, a method, an imaging device, and an electronic apparatus. The calibration apparatus for the imaging device includes a deviation analysis module and a calibration module. The deviation analysis module can obtain a deviation amount between a current position and a desired position of a rotation axis of the imaging device based on different celestial images. After obtaining the deviation amount, the calibration module provides a virtual position to the imaging device based on the deviation amount, enabling the imaging device to operate based on the virtual position. The calibration apparatus for the imaging device provided by the embodiments of the present invention can effectively enhance the autonomy of device calibration. For the user end, it greatly simplifies the calibration process, and improves the efficiency, accuracy, and reliability of calibration.

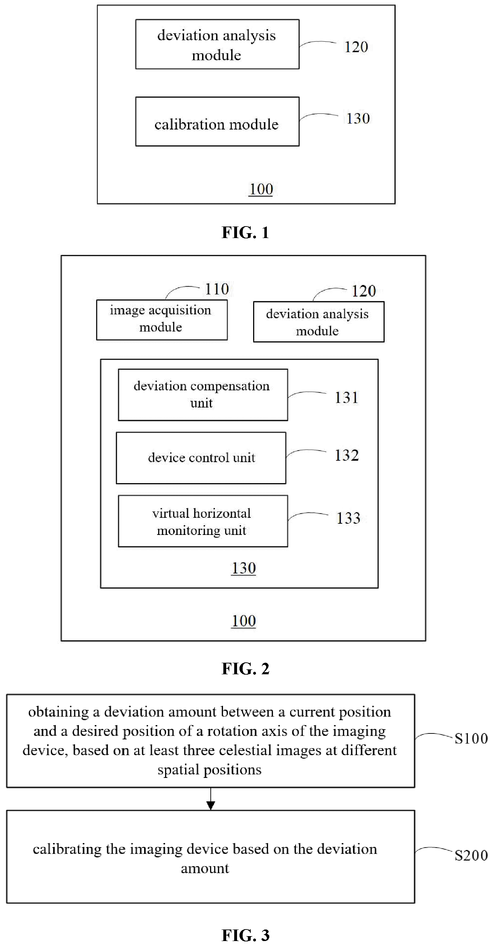

Referring to FIG. 1, FIG. 1 shows a schematic diagram of modules of a calibration apparatus for the imaging device provided by the embodiments of the present invention. The present invention provides a calibration apparatus for the imaging device 100. The calibration apparatus for the imaging device 100 includes: a deviation analysis module 120 and a calibration module 130.

The deviation analysis module 120 is configured to obtain a deviation amount between a current position and a desired position of a rotation axis of the imaging device, based on at least three celestial images at different spatial positions.

The calibration module 130 is configured to calibrate the imaging device based on the deviation amount.

In the above implementation, the deviation analysis module 120 acquires at least three celestial images at different spatial positions at the current position, and processes and analyzes these three celestial images at different spatial positions to obtain the deviation amount between the current position and the desired position of the rotation axis of the imaging device.

In the embodiments of the present invention, the desired position is an expected position of the rotation axis of the imaging device, such as the absolutely vertical position (in which the imaging device is absolutely horizontal), or other positions. It should be noted that the desired position is the position of the rotation axis of the imaging device, not the position of the imaging device itself. When the rotation axis of the imaging device is in an absolutely vertical position, the imaging device is in an absolutely horizontal position.

The current position of the rotation axis is the position of the rotation axis when the imaging device is in its current position. It should still be noted that the current position of the device is not the current position of the rotation axis.

The celestial images obtained by the deviation analysis module 120 are of different positions, for example, three celestial images at different altitude angles and azimuth angles; three celestial images at the same altitude angle but different azimuth angles; or three celestial images at the same azimuth angle but different altitude angles.

By analyzing at least three celestial images at different spatial positions, the deviation analysis module 120 obtains a deviation amount representing the difference between the current position and the desired position (the expected position of the rotation axis of the imaging device) of the rotation axis of the imaging device. The calibration module 130 can obtain a virtual position based on the deviation amount. The virtual position is provided to the imaging device, causing the imaging device to interpret its rotation axis as currently being at the above desired position. It should be emphasized that the calibration module 130 of the calibration apparatus 100 for the imaging device provided in the embodiments of the present invention provides the imaging device with a virtual position. At this virtual position, the rotation axis of the device is at the ideal position, and the imaging device is also at a virtual ideal position. However, the imaging device itself will never reach the virtual desired position from the beginning to the end.

As can be seen that the deviation analysis module 120 of the calibration apparatus for the imaging device provided by the embodiments of the present invention calculates the deviation amount between the current position and the desired position of the rotation axis of the imaging device based on at least three celestial images at different spatial positions, and achieves the calibration of the imaging device based on the deviation value. The calibration apparatus 100 for the imaging device provided by the embodiments of the present invention achieves compensations for the deviation amount through software algorithms, which eliminates deviations occurring during the imaging process when using the calibration method that only relies on physical means to adjust the rotation axis of the imaging device to the desired position (e.g., an absolutely vertical position). By using the imaging device calibration method provided by the embodiments of the present invention to calibrate the imaging device, the stability of the imaging device in tracking the target object can be enhanced.

Referring to FIG. 2, FIG. 2 shows another schematic diagram of modules of the calibration apparatus for the imaging device provided by embodiments of the present invention. As shown in FIG. 2, the calibration apparatus for the imaging device provided by the embodiments of the present invention further includes an image acquisition module 110. The above different spatial positions include the first spatial position, and at least two different second spatial positions.

In the embodiments of the present invention, the image acquisition module 110 is configured to control the imaging device of the rotation axis at the first spatial position to acquire a first celestial image, and to acquire at least two second celestial images in the at least two second spatial positions.

That is to say, the at least three celestial images at different spatial positions acquired by the image acquisition module 110 can be obtained as follows: a first celestial image is acquired at the first spatial position, and the first celestial image can serve as a base image; and the image acquisition module 110 or the operator controls the imaging device to rotate, so as to obtain at least two different second celestial images in the at least two different spatial positions respectively.

In one possible embodiment, the first spatial position and the second spatial positions include spatial positions at different azimuth angles under a preset altitude angle, or spatial positions at different altitude angles under a preset azimuth angle.

The above first celestial image is captured at a specific altitude angle. Then, the rotation axis is controlled to rotate horizontally to positions (i.e., the above second spatial position) of two different horizontal angles corresponding to the two specific altitude angles respectively, so as to obtain two second celestial images. Alternatively, the above first celestial image is captured at a specific horizontal angle. Then, the rotation axis is controlled to rotate vertically to positions (i.e., the above second spatial position) of two different altitude angles corresponding to the two specific horizontal angles respectively, so as to obtain two second celestial images.

Exemplarily, it is assumed that the operator is located outdoors and wants to calibrate the imaging device. First, the operator needs to lift the tube of the imaging device to a certain altitude angle as the initial position (e.g., 30 degrees), and then capture the first celestial image at this initial position. After capturing the first celestial image, the imaging device is controlled to rotate the azimuth angle twice (e.g., rotating the azimuth angle by 15 degrees each time), thereby acquiring two different second celestial images respectively.

Exemplarily, it is assumed that the operator is located indoors, e.g., the operator is on a balcony to obtain celestial images through the window. In this case, the available angles for the operator through the window are limited. At this point, it is recommended that the operator first capture a first celestial image aimed at the center of the window, then make multiple adjustments in altitude angles or azimuth angles, so as to acquire at least two second celestial images.

In the above implementation, the range of value of the altitude angle includes (0°, 90°), and the range of value for the azimuth angle includes (0°, 120°). During the process of capturing the second celestial images, the transformation of the altitude angle or the azimuth angle can be a regular transformation (such as arithmetic variation), or it can be an irregular transformation. For example, the azimuth angle (or altitude angle) may transform from 30 degrees to 50 degrees, and then transform from 50 degrees to 60 degrees.

In another possible embodiment, a first celestial image is captured at a first spatial position, and both the horizontal angle and the altitude angle of the rotation axis of the imaging device are controlled to change, so as to obtain a second celestial image. Then, both the horizontal angle and the altitude angle of the rotation axis of the imaging device are further controlled to change, so as to obtain another second celestial image.

Exemplarily, the operator captures a first celestial image at the first spatial position. Then, by rotating the rotation axis, both the altitude angle and the horizontal angle are changed, so as to obtain the second celestial image. In the current embodiment, the requirement for rotation is lower. It is often a random rotation, and the rotation does not need to occur in a certain direction.

As can be seen that the image acquisition module 110 of the imaging device provided by the embodiments of the present invention can acquire at least three different celestial images through two different ways. Corresponding to these two different celestial image acquisition methods, the deviation analysis module 120 and the calibration module 130 of the present invention have different processing procedures. Therefore, the calibration apparatus for the imaging device provided by embodiments of the present invention is provided with at least two calibration methods. Through the arrangement of the image acquisition module 110, it gives precise support for the subsequent calculation of the deviation amount, and provides a reliable foundation for the calibration of the imaging device.

Continuing to refer to FIG. 2, in an optional embodiment of the embodiments of the present invention, the calibration module 130 in the calibration apparatus for the imaging device provided by the embodiment of the present invention includes a deviation compensation unit 131 and a device control unit 132. Regarding the above embodiment of acquiring the celestial images, during the process of calibrating the imaging device based on the deviation amount,
the deviation compensation unit 131 is configured to use the deviation amount to compensate for the current position of the rotation axis to obtain a virtual position; and
the device control unit 132 is configured to control the imaging device to operate at the virtual position.

In the above implementation, the deviation compensation unit 131 compensates for the current position of the rotation axis based on the deviation amount calculated between the current position and the desired position of the rotation axis of the imaging device, thereby obtaining a virtual position, and sends the virtual position to the device control unit 132. After receiving the virtual position, the device control unit 132 controls the imaging device to work based on the virtual position, thereby completing the calibration of the device.

In embodiments of the present invention, since the deviation amount is calculated in real time from the image data, the device can be dynamically calibrated under different observation conditions. When the imaging device has different errors or deviations, the deviation compensation unit 131 can automatically calculate the deviation amount of the expectedly desired position based on the current position and the desired position of the rotation axis of the imaging device, and compensate for the current position by using the deviation amount, so as to ensure that the imaging device always maintains the optimal working condition.

In embodiments of the present invention, the virtual position is a position after compensating for the current position of the rotation axis with a quantity, and the quantity is derived from the deviation between the current position and the desired position of the rotation axis of the imaging device. In some cases, the virtual position refers to a virtual coordinate position assigned to the imaging device (i.e., a virtual position of the device). In some cases, the virtual position refers to the position (which is in the celestial sphere) where the imaging device is controlled to capture an image. It can also be understood as the coordinate position that the equatorial instrument or the theodolite of the imaging device needs to reach.

As can be seen that the deviation compensation unit 131 of the calibration apparatus 100 for the imaging device provided by the embodiments of the present invention is capable of compensating for the position of the rotation axis based on the deviation amount, thereby ensuring that the rotation axis of the imaging device is always close to or reaches the desired position. Thus, the complexity and errors of physical adjustment are avoided, and a virtual position is obtained directly through deviation compensation. The imaging device is made to work based on the virtual position, thereby improving the accuracy of the calibration process. The deviation compensation unit 131 uses the calculated deviation amount to precisely compensate for the position of the rotation axis through mathematical methods, so as to ensure that the rotation axis of the imaging device can operate in a desired position, which greatly avoids image distortions or deviations due to an undesirable position of the rotation axis. Moreover, the calibration apparatus 100 for the imaging device provided by the embodiments of the present invention is based on the algorithm, which enables the rotation axis of the imaging device to be quickly adjusted to the desired position without relying on repeated physical debugging. This not only reduces the errors caused by manual adjustment but also improves the working efficiency of the entire system. Especially in application scenarios of multiple calibrations or high-frequency observations, it can achieve rapid and efficient calibration.

In an optional embodiment among the embodiments of the present invention, the deviation amount includes the first deviation amount between the current position of the rotation axis and an absolutely vertical position. The calibration apparatus for the imaging device provided by the embodiments of the present invention is most commonly used for horizontal calibration of the imaging device. That is, the deviation amount is between the current horizontal position of the rotation axis and the desired absolutely vertical position, which is named as the first deviation amount herein.

When the deviation amount is the first deviation amount,
the deviation compensation unit 131 is configured to compensate for the current position of the rotation axis by using the first deviation amount, so as to obtain a virtual horizontal position of the imaging device; and the device control unit 132 is specifically configured to control a theodolite of the imaging device to operate at the virtual horizontal position.

After obtaining a first deviation amount between the current position of the rotation axis and the absolutely vertical position by the deviation analysis module 120, the compensation unit compensates the current position by using the first deviation amount, so as to obtain a virtual absolute horizontal GPS of the imaging device (in this virtual absolute horizontal GPS, the rotation axis of the imaging device is absolutely vertical). Furthermore, this virtual horizontal position is assigned to the theodolite of the imaging device, and the theodolite works at this virtual horizontal position, thereby completing the calibration of the imaging device. Before the theodolite starts the tracking process, the virtual GPS is assigned to the theodolite control device, and the control device is made to control the horizontal and vertical rotations according to the tracking mode of the target as defined by the virtual GPS.

The process of obtaining a virtual horizontal position of the imaging device by compensating for the current position of the rotation axis based on the first deviation amount is briefly described as follows. It is assumed that the first deviation amount is obtained. The first deviation amount is substituted into the geographical position where the imaging device is located, and the first deviation amount is converted to a virtual horizontal position of the imaging device. Under this virtual horizontal position, the rotation axis of the device can be considered to be absolutely vertical.

Exemplarily, it is assumed that the rotation axis of the imaging device is currently located at position A, but the rotation axis of the imaging device is not absolutely vertical at position A. The image acquisition module 110 obtains three different celestial images at position A by the above first image acquisition method; the deviation analysis module 120 analyzes and obtains the first deviation amount between the position A and the absolutely vertical position of the rotation axis of the imaging device based on the three different celestial images; and the deviation compensation unit 131 compensates for the position A by using the first deviation amount to obtain the virtual horizontal position at which the device is absolutely horizontal, which is assumed to be position B. The position B is assigned to the theodolite to allow it to consider the device as currently being at the position B. The algorithm is used to deceptively make the device believe that its rotation axis is virtually perfectly in the current position.

As can be seen that the calibration module 130 of the calibration apparatus 100 for the imaging device provided by the embodiments of the present invention replaces the physical adjustment with the virtual horizontal position, making the calibration process more efficient. The device does not require frequent physical adjustments and works only based on virtual horizontal GPS positions, thus reducing the debugging duration and work intensity, and improving the calibration efficiency.

In an optional embodiment, continuing to refer to FIG. 2, the calibration module 130 of the calibration apparatus for the imaging device provided by the embodiments of the present invention further includes: a virtual horizontal monitoring unit 133.

The virtual horizontal monitoring unit 133 is configured to monitor whether a horizontal variation amount in virtual horizontal position of the imaging device operating at the virtual position exceeds a horizontal variation threshold, and to generate a re-calibration signal when the horizontal variation amount in virtual horizontal position exceeds the horizontal variation threshold.

In the implementation, after the calibration of the imaging device, during the operation of the imaging device, the horizontal position may change again due to external environmental changes, device vibrations, or mechanical deformations, etc. The virtual horizontal monitoring unit 133 monitors in real time whether the virtual horizontal position of the device generates a horizontal variation amount exceeding the horizontal variation threshold. If it exceeds the horizontal variation threshold, the virtual horizontal monitoring unit 133 generates a re-calibration signal and sends it to the control center of the calibration apparatus 100 for the imaging device, thereby performing the level calibration of the device again.

It should be noted that the calibration of the imaging device by the calibration apparatus 100 for the imaging device provided by the embodiments of the present invention does not actually change the position of the imaging device, but instead compensates for the deviation by the algorithm. Since the position of the imaging device itself is unchanged, the physical position of the imaging device itself is not horizontal. Thus, in the embodiments of the present invention, the position of the imaging device after calibrated by the calibration apparatus for the imaging device is considered to be a virtual horizontal position of the device.

Optionally, the range of value for the horizontal variation threshold is [3°, 6°]. For example, it is assumed that the horizontal variation threshold is 5°. After the calibration of the imaging device, it is assumed that the virtual horizontal position after calibration of the imaging device is 10°. During the operation of the imaging device, the virtual horizontal monitoring unit 133 monitors the changes in the virtual horizontal position in real time. If it exceeds 15° or falls below 5°, the virtual horizontal monitoring unit 133 will generate a re-calibration signal, informing the device that it needs to be recalibrated.

As can be seen that regarding the calibration apparatus for the imaging device provided by the embodiments of the present invention, by providing the virtual horizontal monitoring unit 133, once the virtual horizontal variation amount of the device exceeds the set threshold, the virtual horizontal monitoring unit 133 will generate the re-calibration signal, thereby triggering the automatic calibration process, which ensures that the virtual horizontal position of the device always maintains stable, thereby guaranteeing that the device can maintain high-precision horizontal calibration in long-term operations or variation environments. The virtual horizontal monitoring unit 133 provides a dynamic correction function for the imaging device, enabling the device to eliminate horizontal deviations caused by external disturbances or internal wear. By setting a reasonable horizontal variation threshold, timely corrections can be made when the device malfunctions occur, thereby enhancing the fault tolerance of the system, and avoiding major errors caused by the accumulation of minor deviations.

In an optional embodiment, still regarding the above embodiment of acquiring the celestial images, the deviation amount includes a second deviation amount between the current position of the rotation axis and a north celestial pole position under a same coordinate system.

When the deviation amount is the second deviation amount:
the deviation compensation unit 131 is configured to compensate for the current position of the rotation axis by using the second deviation amount, so as to obtain a virtual north pole position of the imaging device; and the device control unit 132 is configured to generate a device control signal including the second deviation amount and/or the virtual north pole position.

In the above implementation, the second deviation amount reflects the difference between the current position of the rotation axis and the north celestial pole position. It can be an angle or a coordinate deviation amount, which reflects the deviation of the rotation axis of the device from the ideal direction (the north celestial pole).

The deviation compensation unit 131 compensates the current position of the rotation axis by using the second deviation amount, so as to obtain a virtual north pole position of the imaging device. That is to say, the deviation compensation unit 131 uses the acquired celestial images to obtain a virtual position that simulates the current position of the device at the geographic north pole (where the horizontal rotation axis points toward the north celestial pole). When it is informed that the theodolite is located at the geographic north pole, at this point, based on the device control signal, the horizontal rotation axis is pointed towards the north celestial pole (by using the clamping device or by manually rotating). When the theodolite rotates in the manner of the device at the geographic north pole, the theodolite can be reused as an equatorial instrument.

After the compensation process is completed, the device control unit 132 will generate a control signal including the second deviation amount and/or the virtual north pole position. The control signal guides the imaging device to work at the virtual north pole position.

For the theodolite, this means that it can perform operations similar to those of an equatorial instrument without changing its hardware structure by means of compensation. Before using the equatorial instrument, there is an operation to align the polar axis (the right ascension axis) towards the north celestial pole. Then, the position of the right ascension axis is locked (the direction of the right ascension axis remains unchanged, but the device can rotate around the right ascension axis). Subsequently, the right ascension axis and declination axis are adjusted to find the target to be tracked. After that, the device only needs to rotate around the right ascension axis to achieve tracking for the target.

The equatorial instrument mode is achieved with the assistance of external devices. The horizontal rotation axis of the theodolite points to the north celestial pole (if the device is placed at the north pole and is absolutely level, its horizontal rotation axis will also point to the north celestial pole). Then, the horizontal rotation axis is equivalent to the right ascension axis of the equatorial instrument. Once the target is aligned, simply rotating the horizontal rotation axis can achieve the effect of rotating the right ascension axis on the equatorial instrument, thereby enabling the reuse of the theodolite as an equatorial instrument.

It is worth noting that the theodolite itself can only rotate on the horizontal coordinate. Even if the theodolite can always keep tracked target in the center of the picture, the picture will still rotate, i.e., generating field rotation. Through the calibration apparatus for the imaging device provided by the embodiments of the present invention, the theodolite can be reused as the equatorial instrument. After conversion, the entire device rotates around the north and south poles (at this time, the polar axis points towards the north pole), being consistent with the center of the Earth's rotation, so that the picture will not rotate.

As can be seen that the calibration module 130 compensates for the deviation of the rotation axis, so that the theodolite can simulate the working mode of the equatorial instrument, which greatly improves the applicability and accuracy of the device. Especially in astronomical imaging, it can greatly avoid the generation of a field rotation and achieve a better imaging effect. It not only reduces the cost of hardware adjustments and enhances the imaging effects, but also improves the overall performance and application range of the imaging device.

In an optional embodiment, in a process of obtaining a deviation amount between a current position and a desired position of a rotation axis of the imaging device, based on at least three celestial images at different spatial positions, the deviation analysis module 120 is configured as follows.

It obtains coordinate positions of the three celestial images respectively under an equatorial coordinate system based on the three celestial images of different spatial positions.

It converts the coordinate positions under the equatorial coordinate system to coordinate positions under the rectangular coordinate system, and calculates a normal vector of a plane formed by the three coordinate positions under the rectangular coordinate system.

It transforms the normal vector under the rectangular coordinate system to coordinate positions under a horizontal coordinate system to obtain horizontal coordinates of the rotation axis.

It obtains the deviation amount of the rotation axis based on the horizontal coordinates of the rotation axis and standard horizontal coordinates of the rotation axis in an absolutely vertical position.

In the above implementation, the coordinate positions of the three images under the equatorial coordinate system are respectively obtained based on the three celestial images of the different spatial positions. Each celestial image will correspond to a celestial coordinate in the equatorial coordinate system, usually denoted as right ascension (RA) and declination (Dec). It is assumed that the corresponding celestial coordinates of the three images are respectively as follows: the equatorial coordinates of the first celestial image: (RA1, Dec1), the equatorial coordinates of the second celestial image: (RA2, Dec2), and the equatorial coordinates of another second celestial image: (RA3, Dec3). In the equatorial coordinate system, these coordinates are spherical coordinates, which can be converted to Cartesian coordinates in a rectangular coordinate system. Right ascension (RA) and declination (Dec) respectively correspond to longitude and latitude in the spherical coordinate system.

For example, a method to obtain the coordinate position of the celestial image in the equatorial coordinate system is as follows. It randomly selects two stars and constructs a circular area based on the diameter of the line connecting the two stars; and then, it selects two more stars in this area to form a first four-star combination, and calculates its corresponding first geometric hash code. Then, it divides the reference star table into grids, and selects the brightest multiple stars from each grid. Four of these stars are combined to form a second four-star combination. It calculates its corresponding second geometric hash code. Finally, it compares different values between the first geometric hash code and the second geometric hash code. If the different value is within a preset second threshold, the first four-star combination is considered to be successfully matched with the second four-star combination. When the number of successfully matched combinations within a certain grid exceeds a preset third threshold, it can be determined that the image is located within the corresponding celestial region. Based on the corresponding relationship of the successfully matched combinations, the right ascension and declination coordinates corresponding to the center point of the celestial image can be obtained. The implementation is only exemplary. Of course, other positions of the celestial image can also be selected as the image coordinates of the celestial image.

The coordinate position (RAi, Deci) of each celestial image in the equatorial coordinate system is converted to the coordinate position (xi, yi, zi) in the rectangular coordinate system through formulas: x = cos(Dec) · cos(RA) , y = cos(Dec) · sin(RA) , and z = sin(Dec) .

For example, it is assumed that the first celestial image has the coordinate (RA1 = 10°, Dec1 = 20°), the second celestial image has the coordinate (RA2 = 50°, Dec2 = 20°), and another second celestial image has the coordinate (RA3 = 90°, Dec3 = 20°). The right ascension and declination are provided in angle unit, and the calculation usually requires the conversion of angles to radians. The calculation process is as follows:
$RA 1 = 10 ° = 10 π / 180 radians \approx 0.1745 radians ,$
$Dec 1 = 20 ° = \frac{20 π}{180} radians \approx 0.3491 radians ,$
${x}_{1} = cos \left(0.3491\right) cos \left(0.1745\right) \approx 0.9255 ,$
${y}_{1} = cos \left(0.3491\right) ⋅ sin \left(0.1745\right) \approx 0.1636 ,$
${z}_{1} = sin \left(0.3491\right) \approx 0.3420 ,$
$\left({x}_{1}, {y}_{1}, {z}_{1}\right) = \left(0.9255, 0.1636, 0.3420\right) .$

Similarly, the calculation of the other two coordinates is as follows:
$\left({x}_{2}{, y}_{2}{, z}_{2}\right) = \left(0.6047, 0.7204, 0.3420\right) ,$
$\left({x}_{3}{, y}_{3}{, z}_{3}\right) = \left(0, 0.9397, 0.3420\right) .$

The obtained coordinate positions under the rectangular coordinate system are as follows: ( x ₁ , y ₁ , z ₁ ) , ( x ₂ , y ₂, z ₂ ) , and ( x ₃ , y ₃ , z ₃ ). Furthermore, the normal vector n̅ of the plane formed by the three coordinate positions is calculated in the rectangular coordinate system.

First, it calculates the vector v̅₁̅=(x₂ - x₁, y₂ - y₁, z₂ - z₁) from the point (x₁, y₁, z₁) to the point (x₂, y₂, z₂). Then, it calculates the vector v̅₂̅ = (x₃ - x₂, y₃ - y₂, z₃ - z₂) from the point(x₂, y₂, z₂) to the point (x₃, y₃, z₃). By calculating the cross product of the vector v̅₁̅ and v̅₂̅, the normal vector n̅ can be obtained, i.e., n̅ = v̅₁̅ × v̅₂̅. For example, by using the above (x₁, y₁, z₁) = (0.9255,0.1636,0.3420) , (x₂, y₂, z₂) = (0.6047,0.7204,0.3420), the normal vector n̅ = (0,0,0.2661) can be obtained. Then, it transforms the normal vector under the rectangular coordinate system to coordinate positions under the horizontal coordinate system to obtain horizontal coordinates of the rotation axis.

The horizontal coordinate system (altitude-azimuth, or Alt-Az for short) has two components: the azimuth component (az) and the altitude component (alt). The azimuth component is the angle measured clockwise from the north direction. It is usually calculated from north to east (0° is north, 90° is east, 180° is south, and 270° is west). The azimuth component is the height of the celestial body relative to the ground plane, ranging from -90° (zenith) to +90° (ground plane).

In order to calculate the horizontal coordinate of the rotation axis (normal vector), the angle between the normal vector and the zenith needs to be calculated first, i.e., the zenith angle. The calculation formula is: $θ = {cos}^{- 1} \left(\frac{z}{\sqrt{{x}^{2} + {y}^{2} + {z}^{2}}}\right)$. The azimuth angle (az) and the altitude angle (alt) are calculated based on the projection of the normal vector onto the celestial sphere. The calculation formulas are: $az = {tan}^{- 1} \left(\frac{y}{x}\right)$, alt = 90° - θ.

It is assumed that the calculated horizontal coordinate of the normal vector n̅ is (az, alt). If the imaging device is absolutely horizontal, the horizontal coordinate of the rotation center should be (0,90°), and the first deviation amount in the horizontal coordinate system is defined as: Diff_{az} = az, Diffₐₗₜ = 90 - alt. In the embodiments of the present invention, the final first deviation is the value converted from the horizontal coordinate to GPS, i.e., Diff_{Lat} = cos(Diff_{az}) ∗ Diffₐₗₜ, Diff_{Lon} = sin(Diff_{az}) ∗ Diffₐₗₜ.

As can be seen that regarding the calibration apparatus for the imaging device provided by the embodiments of the present invention, by providing the deviation analysis module 120, the celestial positions in the celestial image can be analyzed, and combined with coordinate conversion and geometric calculation, the first deviation amount between the rotation axis of the imaging device and the absolutely vertical position can be precisely obtained. The first deviation amount is configured to compensate for the rotation axis position of the device, enabling the rotation axis of the imaging device to operate at the desired horizontal position.

In an optional embodiment, regarding the above embodiment of acquiring the celestial images, the deviation amount includes a third deviation amount between an actual positional coordinate of the celestial images obtained by the imaging device at the current position of the rotation axis and a command positional coordinate of the celestial images obtained by the imaging device at the absolutely vertical position of the rotation axis.

To calculate the above third deviation amount, in a process of obtaining a deviation amount between a current position and a desired position of a rotation axis of the imaging device, based on at least three celestial images at different spatial positions, the deviation analysis module 120 is specifically configured to:
use the first celestial image as a reference image and obtain a reference origin; acquire at least two groups of command positional coordinates and actual positional coordinates of the second celestial images relative to the reference origin; and calculate a third deviation amount based on the at least two groups of command positional coordinates and the actual positional coordinates of the second celestial images.

Exemplarily, the first group of coordinates is: the command positional coordinate (X1, Y1), and the actual positional coordinate (X2, Y2). The second group of coordinates is: the command positional coordinate (W1, Z1), and the actual positional coordinate (W2, Z2). It is assumed that both (X1, Y1) and (W1, Z1) are transformed into (X2, Y2) and (W2, Z2) under the same transformation rule or at the same deviation of the rotation axis of the device. If such transformation rule is quantified, the above third deviation amount can be calculated.

Optionally, it calculates a transformation matrix converting the command positional coordinates to the actual positional coordinates based on the at least two groups of the command positional coordinates and the actual positional coordinates of second celestial images, and it calculates an inverse matrix of the transformation matrix to obtain the third deviation amount.

It is assumed that (X1, Y1)and (W1, Z1) are both transformed into (X2, Y2) and (W2, Z2) under the same transformation matrix. It is assumed that this matrix is $\left[\begin{matrix}A & B \\ C & D\end{matrix}\right]$, and then it substitutes (X1, Y1) and ( W1, Z1), (X2, Y2) and (W2, Z2) into this matrix, i.e.,
$\left[\begin{matrix}X 2 \\ Y 2\end{matrix}\right] = \left[\begin{matrix}A & B \\ C & D\end{matrix}\right] \left[\begin{matrix}X 1 \\ Y 1\end{matrix}\right] ,$
$\left[\begin{matrix}W 2 \\ Z 2\end{matrix}\right] = \left[\begin{matrix}A & B \\ C & D\end{matrix}\right] \left[\begin{matrix}W 1 \\ Z 1\end{matrix}\right] .$

Based on the above, the transformation matrix $\left[\begin{matrix}A & B \\ C & D\end{matrix}\right]$ is derived.

After obtaining the transformation matrix $\left[\begin{matrix}A & B \\ C & D\end{matrix}\right]$ that can convert the command coordinate position into the actual coordinate position, the transformation matrix reflects the deviation between the actual situation and the ideal situation. The disclosed embodiment needs to calibrate the imaging device based on the transformation matrix. Then, the inverse matrix ${\left[\begin{matrix}A & B \\ C & D\end{matrix}\right]}^{- 1}$ of the transformation matrix is further calculated, and it is the third deviation amount in the embodiments of the present invention. Therefore, the virtual command coordinate for eliminating the third deviation amount can be generated before actual imaging.

In an optional embodiment, when the deviation amount is the third deviation amount,
the deviation compensation unit 131 is configured to use the third deviation amount to compensate for the current position of the rotation axis, thereby obtaining a virtual command coordinate, and the device control unit 132 is specifically configured to control the imaging device to operate under the virtual command coordinate during the imaging process of the imaging device.

During the calibration process of the imaging device, the role of the inverse matrix is to convert, when the rotation axis of the imaging device is at the current position, the command coordinate of the desired position for the device to capture to the virtual command coordinate for the imaging device to capture the desired position when the assumed rotation axis of the imaging device is at an absolutely vertical position. Therefore, the imaging position of the imaging device corresponds to the position indicated by the virtual instruction coordinate. For example, when it needs to transform the coordinate into (I2 , J2 ), the desired imaging position (I2 , J2 ) is processed by ${\left[\begin{matrix}A & B \\ C & D\end{matrix}\right]}^{- 1}$, thereby obtaining the virtual command coordinate (I1 , J1 ). Then, the indication (I1 , J1 ) is sent to the device control unit 132, and the imaging device is controlled to operate under the virtual command coordinate (I1 , J1), thereby achieving the goal of turning to the designated area.

As can be seen that the calibration apparatus 100 for the imaging device provided by the embodiments of the present invention can calibrate the command positional coordinate that is desired to be captured based on the third deviation amount (i.e., the inverse matrix of the transformation matrix) before each imaging of the imaging device, enabling the imaging device to image at the virtual command coordinate position. It can effectively compensate for the imaging error caused by the deviation between the current position of the rotation axis of the device and the absolutely vertical position, thereby achieving real-time calibration of the imaging device, and ensuring the accuracy and stability of the imaging after calibration of the device.

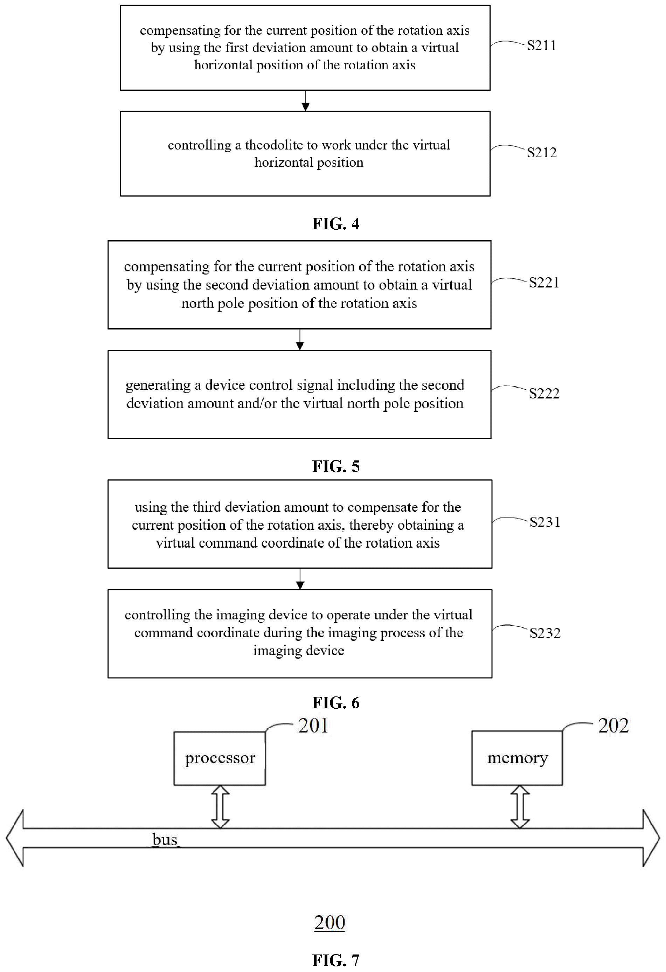

Referring to FIG. 3, FIG. 3 shows a calibration flowchart for an imaging device provided by embodiments of the present invention. The present invention further provides a calibration method for the imaging device, and the calibration method for the imaging device can be implemented by the electronic device provided in FIG. 7. The calibration method for the imaging device includes the following steps.

Step S100: obtaining a deviation amount between a current position and a desired position of a rotation axis of the imaging device, based on at least three celestial images at different spatial positions.

Step S200: calibrating the imaging device based on the deviation amount.

In an optional embodiment, in conjunction with FIG. 4, FIG. 4 shows a flowchart of a calibration example provided by embodiments of the present invention. The deviation amount includes a first deviation amount between the current position of the rotation axis and an absolutely vertical position. The above step S200 of calibrating the imaging device based on the deviation amount can include the following steps.

Step S211: compensating for the current position of the rotation axis by using the first deviation amount to obtain a virtual horizontal position of the rotation axis.

Step S212: controlling a theodolite to work under the virtual horizontal position.

In an optional embodiment, in conjunction with FIG. 5, FIG. 5 shows a flowchart of another calibration example provided by embodiments of the present invention. The deviation amount includes a second deviation amount between the current position of the rotation axis and a north celestial pole position under the same coordinate system. The above step S200 of calibrating the imaging device based on the deviation amount can include the following steps.

Step S221: compensating for the current position of the rotation axis by using the second deviation amount to obtain a virtual north pole position of the imaging device.

Step S222: generating a device control signal including the second deviation amount and/or the virtual north pole position.

In an optional embodiment, in conjunction with FIG. 6, FIG. 6 shows a flowchart of another calibration example provided by embodiments of the present invention. The deviation amount includes a third deviation amount between an actual positional coordinate of the celestial images obtained by the imaging device at the current position of the rotation axis and a command positional coordinate of the celestial images obtained by the imaging device at the absolutely vertical position of the rotation axis. The above step S200 of calibrating the imaging device based on the deviation amount can include the following steps.

Step S231: using the third deviation amount to compensate for the current position of the rotation axis, thereby obtaining a virtual command coordinate.

Step S232: controlling the imaging device to operate under the virtual command coordinate during the imaging process of the imaging device.

In an optional embodiment, the different spatial positions include: a first spatial position and at least two second spatial positions. The above step S100 of obtaining a deviation amount between a current position and a desired position of a rotation axis of the imaging device, based on at least three celestial images at different spatial positions can be realized by the following step:

controlling the imaging device with the rotation axis at the first spatial position to acquire a first celestial image, and acquire at least two second celestial images at the at least two second spatial positions.

The first spatial position and the second spatial positions include spatial positions at different azimuth angles under a preset altitude angle, or spatial positions at different altitude angles under a preset azimuth angle.

In an optional embodiment, the calibration method for the imaging device further includes:
monitoring whether a horizontal variation amount in virtual horizontal position of the imaging device operating at the virtual position exceeds a horizontal variation threshold; and generating a re-calibration signal when the horizontal variation amount in virtual horizontal position exceeds the horizontal variation threshold.

In an optional embodiment, the calculation of the above first deviation amount and the second deviation amount can be realized in the following steps:
obtaining coordinate positions of the three celestial images respectively under an equatorial coordinate system based on the three celestial images of the different spatial positions; converting the coordinate positions under the equatorial coordinate system to coordinate positions under the rectangular coordinate system, and calculating a normal vector of a plane formed by the three coordinate positions under the rectangular coordinate system; transforming the normal vector under the rectangular coordinate system to coordinate positions under a horizontal coordinate system to obtain horizontal coordinates of the rotation axis; and obtaining the deviation amount of the rotation axis based on the horizontal coordinates of the rotation axis and standard horizontal coordinates of the rotation axis in an absolutely vertical position.

In an optional embodiment, the calculation of the above third deviation amount can be realized in the following steps:
using the first celestial image as a reference image and obtaining a reference origin; acquiring at least two groups of command positional coordinates and actual positional coordinates of the second celestial images relative to the reference origin, wherein the command positional coordinates represent acquired position coordinates of the second celestial images when the rotation axis of the imaging device is at the absolutely vertical position, and the actual positional coordinates represent acquired coordinate positions of the second celestial images when the rotation axis of the imaging device is at the current position; and calculating a third deviation amount based on the at least two groups of command positional coordinates and the actual positional coordinates of the second celestial images.

The present invention provides an imaging device, and the imaging device includes an imaging module, a theodolite, and a controller.

The imaging module and the theodolite are connected to the controller.

The imaging module is configured to acquire at least three celestial images at different spatial positions and send the celestial images to the controller.

The controller is configured to compensate for a current position of a rotation axis to obtain a virtual position based on the celestial images, and to send the virtual position to the theodolite.

The theodolite is configured to receive the virtual position.

The imaging device provided by the present invention realizes rotation axis calibration based on the celestial images through the collaborative operation of the imaging module, the theodolite, and the controller. The imaging module acquires the celestial images at different spatial positions and sends them to the controller. The controller compensates for the current position of the rotation axis based on these images, calculates the virtual position, and sends the virtual position to the theodolite. After receiving the virtual position, the theodolite calibrates the imaging device. The imaging device can effectively compensate for the physical positional deviation of the rotation axis of the device, which ensures that the imaging device can be precisely aligned to the target, thereby improving the positioning accuracy and the imaging effect of the device.

Referring to FIG. 7, FIG. 7 shows a structure schematic diagram of an electronic device provided by embodiments of the present invention. The embodiments of the present invention provide an electronic device 200, including: a processor 201 and a memory 202, wherein the memory 202 stores machine-readable instructions executable by the processor 201, and the machine-readable instructions perform the steps in any one of the embodiments of the above calibration method for the imaging device when executed by the processor 201.

Based on the same concept, the embodiments of the present invention further provide a computer program product, wherein the computer program product includes computer programs/instructions, and the computer programs/instructions are processed by a processor to perform the steps in any one of the embodiments of the above calibration method for the imaging device.

Based on the same concept, the embodiments of the present invention further provide a computer-readable storage medium, and the computer-readable storage medium stores computer program instructions, wherein the computer program instructions perform the steps in any one of the embodiments in the above calibration method for the imaging device when read and executed by a processor.

The computer-readable storage medium can be various media capable of storing program code, such as Random Access Memory (RAM), Read Only Memory (ROM), Programmable Read-Only Memory (PROM), Erasable Programmable Read-Only Memory (EPROM), or Electrical Erasable Programmable Read-Only Memory (EEPROM).

In the text, relational terms such as "first", and "second", etc., in the description of the present invention are only used to distinguish one entity or operation from another entity or operation, and do not necessarily require or imply the existence of any such actual relationship or order between these entities or operations. Furthermore, the terms "include", "comprise", or any other variant thereof are intended to cover a non-exclusive inclusion, so that a process, method, item, or device comprising a set of components includes not only those components, but also so that a process, method, article, or device that includes a list of elements not only includes those elements, but may also include other elements that are not explicitly listed, or elements that are inherent to such a process, method, article, or device. Other components that are not explicitly listed, or components that are inherent to this process, method, item, or device. Without further limitation, the fact that an element is defined by the phrase "including ......" does not exclude the existence of other identical element in the process, method, item, or device including the element.

The foregoing are merely embodiments of the present invention, and are not used to limit the scope of the protection of the present invention. For those skilled in the art, the present invention may have various changes and variations. Any modifications, equivalent replacements, improvements, etc., made within the spirit and principles of the present invention, shall be included within the scope of protection of the present invention.

### INDUSTRIAL APPLICABILITY

By adopting the above solutions, the autonomy of device calibration can be effectively enhanced. For the user end, it greatly simplifies the calibration process, and improves the efficiency, accuracy, and reliability of calibration.

## Claims

1. A calibration apparatus for an imaging device, **characterized in that** the calibration apparatus comprises a deviation analysis module and a calibration module;
the deviation analysis module is configured to obtain a deviation amount between a current position and a desired position of a rotation axis of the imaging device, based on at least three celestial images at different spatial positions; and
the calibration module is configured to calibrate the imaging device based on the deviation amount.

2. The calibration apparatus according to claim 1, wherein the different spatial positions comprise: a first spatial position and at least two second spatial positions, and the calibration apparatus further comprises an image acquisition module, wherein
the image acquisition module is configured to control the imaging device with the rotation axis at the first spatial position to acquire a first celestial image, and to acquire at least two second celestial images in the at least two second spatial positions.

3. The calibration apparatus according to claim 2, wherein the first spatial position and the second spatial positions comprise spatial positions at different azimuth angles under a preset altitude angle, or spatial positions at different altitude angles under a preset azimuth angle.

4. The calibration apparatus according to any one of claims 1-3, wherein the calibration module comprises a deviation compensation unit and a device control unit, wherein in the process of calibrating the imaging device based on the deviation amount,
the deviation compensation unit is configured to use the deviation amount to compensate for the current position of the rotation axis to obtain a virtual position; and
the device control unit is configured to control the imaging device to operate based on the virtual position.

5. The calibration apparatus according to claim 4, wherein the deviation amount comprises a first deviation amount between the current position of the rotation axis and an absolutely vertical position, wherein when the deviation amount is the first deviation amount,
the deviation compensation unit is configured to compensate for the current position of the rotation axis by using the first deviation amount, so as to obtain a virtual horizontal position of the imaging device; and
the device control unit is configured to control a theodolite of the imaging device to operate at the virtual horizontal position.

6. The calibration apparatus according to claim 4 or 5, wherein the calibration module further comprises: a virtual horizontal monitoring unit, wherein
the virtual horizontal monitoring unit is configured to monitor whether a horizontal variation amount in virtual horizontal position of the imaging device operating at the virtual position exceeds a horizontal variation threshold, and
generate a re-calibration signal when the horizontal variation amount in virtual horizontal position exceeds the horizontal variation threshold.

7. The calibration apparatus according to claim 6, wherein a range of values for the horizontal variation threshold is [3°, 6°].

8. The calibration apparatus according to any one of claims 4-7, wherein the deviation amount comprises a second deviation amount between the current position of the rotation axis and a north celestial pole position under a same coordinate system, wherein when the deviation amount is the second deviation amount,
the deviation compensation unit is configured to compensate for the current position of the rotation axis by using the second deviation amount, so as to obtain a virtual north pole position of the imaging device; and
the device control unit is configured to generate a device control signal comprising the second deviation amount and/or the virtual north pole position.

9. The calibration apparatus according to any one of claims 1-8, wherein in the process of obtaining a deviation amount between a current position and a desired position of a rotation axis of the imaging device, based on at least three celestial images at different spatial positions, the deviation analysis module is configured to:
obtain coordinate positions of the three celestial images respectively under an equatorial coordinate system based on the three celestial images of the different spatial positions;
convert the coordinate positions under the equatorial coordinate system to coordinate positions under a rectangular coordinate system, and calculate a normal vector of a plane formed by three coordinate positions under the rectangular coordinate system;
transform the normal vector under the rectangular coordinate system to coordinate positions under a horizontal coordinate system to obtain horizontal coordinates of the rotation axis; and
obtain the deviation amount of the rotation axis based on the horizontal coordinates of the rotation axis and standard horizontal coordinates of the rotation axis in an absolutely vertical position.

10. The calibration apparatus according to any one of claims 2-9, wherein the deviation amount comprises a third deviation amount between an actual positional coordinate of celestial images obtained by the imaging device at the current position of the rotation axis and a command positional coordinate of the celestial images obtained by the imaging device at an absolutely vertical position of the rotation axis;
in the process of obtaining a deviation amount between a current position and a desired position of a rotation axis of the imaging device, based on at least three celestial images at different spatial positions, the deviation analysis module is configured to:
use the first celestial image as a reference image and obtain a reference origin;
acquire at least two groups of command positional coordinates and actual positional coordinates of the second celestial images relative to the reference origin, wherein the command positional coordinates represent position coordinates of the second celestial images acquired by the imaging device when the rotation axis is at the absolutely vertical position, and the actual positional coordinates represent coordinate positions of the second celestial images acquired by the imaging device when the rotation axis is at the current position; and
calculate the third deviation amount based on the at least two groups of the command positional coordinates and the actual positional coordinates of the second celestial images.

11. The calibration apparatus according to claim 10, wherein in the process of calculating the third deviation amount based on the at least two groups of the command positional coordinates and the actual positional coordinates of the second celestial images, the deviation analysis module is configured to:
calculate a transformation matrix converting the command positional coordinates to the actual positional coordinates based on the at least two groups of the command positional coordinates and the actual positional coordinates of the second celestial images, and
calculate an inverse matrix of the transformation matrix to obtain the third deviation amount.

12. The calibration apparatus according to claim 10 or 11, wherein when the deviation amount is the third deviation amount,
the deviation compensation unit is configured to use the third deviation amount to compensate for the current position of the rotation axis, to obtain a virtual command coordinate, and
the device control unit is configured to control the imaging device to operate under the virtual command coordinate during an imaging process of the imaging device.

13. A calibration method for an imaging device, **characterized in that** the calibration method comprises:
obtaining a deviation amount between a current position and a desired position of a rotation axis of the imaging device, based on at least three celestial images at different spatial positions; and
calibrating the imaging device based on the deviation amount.

14. The calibration method according to claim 13, wherein when the deviation amount comprises a first deviation amount between the current position of the rotation axis and an absolutely vertical position, the step of calibrating the imaging device based on the deviation amount comprises:
compensating for the current position of the rotation axis by using the first deviation amount, so as to obtain a virtual horizontal position of the imaging device; and
controlling a theodolite to work under the virtual horizontal position.

15. The calibration method according to claim 13 or 14, wherein when the deviation amount comprises a second deviation amount between the current position of the rotation axis and a north celestial pole position under a same coordinate system, the step of calibrating the imaging device based on the deviation amount comprises:
compensating for the current position of the rotation axis by using the second deviation amount, so as to obtain a virtual north pole position of the rotation axis; and
generating a device control signal comprising the second deviation amount and/or the virtual north pole position.

16. The calibration method according to any one of claims 13 to 15, wherein when the deviation amount comprises a third deviation amount between an actual positional coordinate of celestial images obtained by the imaging device at the current position of the rotation axis and a command positional coordinate of the celestial images obtained by the imaging device at an absolutely vertical position of the rotation axis, the step of calibrating the imaging device based on the deviation amount comprises:
using the third deviation amount to compensate for the current position of the rotation axis, thereby obtaining a virtual command coordinate, and
controlling the imaging device to operate under the virtual command coordinate during an imaging process of the imaging device.

17. An imaging device, **characterized in that** the imaging device comprises: an imaging module, a theodolite, and a controller;
the imaging module and the theodolite are connected to the controller;
the imaging module is configured to acquire at least three celestial images at different spatial positions and send the celestial images to the controller;
the controller is configured to compensate for a current position of a rotation axis to obtain a virtual position based on the celestial images, and to send the virtual position to the theodolite; and
the theodolite is configured to receive the virtual position.

18. An electronic device, **characterized in that** the electronic device comprises a memory and a processor; the memory stores program instructions, and the processor executes the steps in the method according to any one of claims 13-16 when the processor runs the program instructions.

19. A computer program product, **characterized in that** the computer program product comprises computer programs/instructions, and the computer programs/instructions implement the steps of the method according to any one of claims 13-16 when executed by a processor.
